(19) **Europäisches Patentamt**
**European Patent Office**
**Office européen des brevets**

(11) **EP 1 287 410 B1**

(12) **EUROPEAN PATENT SPECIFICATION**

(45) Date of publication and mention
of the grant of the patent:
**14.05.2008 Bulletin 2008/20**

(51) Int Cl.:
***G05B 19/00*** *(2006.01)*

(21) Application number: **01932900.2**

(86) International application number:
**PCT/US2001/014196**

(22) Date of filing: **03.05.2001**

(87) International publication number:
**WO 2001/084254 (08.11.2001 Gazette 2001/45)**

(54) **APPARATUSES AND PROCESSES FOR ANALYZING A SYSTEM HAVING FALSE START EVENTS**

VORRICHTUNG UND VERFAHREN ZUR ANALYSE EINES SYSTEMS MIT FEHLSTARTEN

APPAREILS ET PROCEDES INFORMATIQUES SERVANT A L'ANALYSE D'UN SYSTEME PRESENTANT DES CAS DE FAUX DEMARRAGES

(84) Designated Contracting States:
**AT BE CH CY DE DK ES FI FR GB GR IE IT LI LU MC NL PT SE TR**

(30) Priority: **04.05.2000 US 202010 P**

(43) Date of publication of application:
**05.03.2003 Bulletin 2003/10**

(73) Proprietors:
• **THE PROCTER & GAMBLE COMPANY**
**Cincinnati, Ohio 45202 (US)**
• **University of California**
**Los Alamos, NM 87544 (US)**

(72) Inventors:
• **BERG, Eric, C.**
**Maineville, OH 45039 (US)**
• **LANGE, Thomas, Jerome**
**Cincinnati, OH 45215 (US)**
• **CAPORALE, Donna, Marie**
**Cincinnati, OH 45241 (US)**
• **KOEHLER, Arthur, J.**
**Middletown, OH 45044 (US)**
• **MARTZ, Harry, F.**
**Los Alamos, NM 87544 (US)**
• **LOONEY, Michael, T.**
**West Chester, OH 45069 (US)**

(74) Representative: **Hampton, Matthew John**
**Howrey LLP**
**Rembrandt Tower, 31st Floor**
**Amstelplein 1**
**1096 HA Amsterdam (NL)**

(56) References cited:
**EP-A- 0 878 761          WO-A-98/24042**
**US-A- 5 210 704          US-A- 5 455 777**

• **PALUMBO D L: "Using failure modes and effects simulation as a means of reliability analysis" , PROCEEDINGS OF THE DIGITAL AVIONICS SYSTEMS CONFERENCE. SEATTLE, OCT. 5 - 8, 1992, NEW YORK, IEEE, US, VOL. CONF. 11, PAGE(S) 102-107 XP010106686 ISBN: 0-7803-0820-4 the whole document**
• **NICOL D M ET AL: "A GRAPHICAL MODEL-BASED RELIABILITY ESTIMATION TOOL AND FAILURE MODE & EFFECTS SIMULATOR" , PROCEEDINGS OF THE ANNUAL RELIABILITY AND MAINTAINABILITY SYMPOSIUM. WASHINGTON, JAN. 16 - 19, 1995, NEW YORK, IEEE, US, PAGE(S) 74-81 XP000538592 ISBN: 0-7803-2471-4 abstract**

**Description**

## TECHNICAL FIELD OF THE INVENTION

The present invention relates to the field of processes and apparatuses for analyzing a system, and, more particularly, to the field of processes and apparatuses for simulating and analyzing repairable systems, such as manufacturing systems, queuing systems, etc.

## BACKGROUND OF THE INVENTION

Reliability is a measure of the probability that parts, components, products, or systems will perform their designed-for functions without failure in specified environments for desired periods at a given confidence level. Typically, reliability is expressed as a decimal fraction (e. g., 0. 832). Reliability Engineering encompasses the theoretical and practical tools by which the probability and capability of parts, components, equipment, products, and systems to perform their required functions can be specified, predicted, tested, demonstrated, installed, and initialized. Powerful reliability engineering tools which enable the accurate prediction of the reliability of parts, components, and systems can provide a company with a significant competitive advantage. For example, accurate prediction of the reliability of a proposed or existing manufacturing or production line can decrease costs, increase speed to market of new products, and provide more predictable project outcomes. Accurate reliability prediction can also be used to identify and allocate resources for the implementation of process changes which can increase the reliability of a manufacturing system.

International Patent Publication No. WO 98/24042 (Sunstrand Corporation), European Patent Publication No. EP-A-0878761 (Nippon Electric Co.), US Patent No. 5,455,777 (Fujiyama Kazunari et. al) and Palumbo D.L. 'Using failure modes and effects simulation as a means of reliability analysis' in Proceedings of the Digital Avionics Systems Conference, Seattle, October 5-8, 1992, New York, IEEE US, Vol. Conf. 11, Pages 102-107 all describe reliability analyses and simulation processes which evaluate single-cause failure modes of a given system.

Historically, such reliability analyses and simulations have depended on commonly held statistical assumptions regarding independence and identical distribution of time to</RTI> failure events, and on methods such as Markov Chain simulations (which track state changes sequentially through time) to simulate the reliability of production systems or their subsystems. For use in simulating the dynamics of a complex manufacturing system, these simulations can be time consuming, and expensive to develop and run. Simplifications can introduce errors which challenge the validity and usefulness of these simulations. Benefits in speed to market, right to market, and predictable project outcomes, as above, may be had from methods which offer high degrees of accuracy in simulating the performance of existing systems and may be used for simulating scenarios which intend to alter such systems, or to simulate systems which may use new combinations of subsystems from valid models of existing manufacturing systems.

Manufacturing costs and capacity can be better understood and controlled with more accurate prediction methods resulting in less market upset, particularly during the early phases of a new product introduction.

As such, there is a need for simulation methods which can predict the coupling or compounding effects that premature failures, or "stop-and-go" operations have on the manufacturing system performance. Further, there is a need for simulation methods which enable better utilization of downtime for repair and restoration of system operation.

That is, repair actions are taken specifically to raise the probability of a successful restart of the failed subsystem, and to reduce the frequency of false starts, and short times to failure due to inadequate repair (i.e. maintenance induced failure).

## SUMMARY OF THE INVENTION

Computer apparatuses and processes for analyzing a system are provided. The apparatuses and processes incorporate steps of collecting data from a first system, wherein the first system has a plurality of failure modes and the data relates to the failure modes, parameterizing the data for use in a simulation of a second system, and executing a simulation of the second system. The step of executing the simulation also includes determining whether the second system will encounter a first false start event based upon the data collected from the first system.

## BRIEF DESCRIPTION OF THE DRAWINGS

While the specification concludes with claims particularly pointing out and distinctly claiming the invention, it is believed that the present invention will be better understood from the following description taken in conjunction with the accompanying drawings in which:

Fig. 1 is a schematic illustration of exemplary process in accordance with one aspect of the present invention;

Fig. 2 is a schematic illustration of an exemplary paper towel manufacturing system;

Fig. 3 is a schematic illustration of an illustrative hierarchy for the manufacturing system of Fig. 2;

Fig. 4 is a plot of exemplary downtime system loss event data;

Fig. 5 is a schematic illustration of networked computers suitable for use with the present invention;

Fig. 6 is a schematic illustration of a preferred architecture for a simulation made in accordance with the present invention;

Figs. 7 to 9 are schematic illustrations of a preferred process implemented using the simulation of Fig. 6; and

Fig. 10 is a schematic illustration of a preferred process implemented for the accumulator of the simulation of Fig. 6.

## DETAILED DESCRIPTION OF THE PREFERRED EMBODIMENTS

Reference will now be made in detail to the present preferred embodiments of the invention, examples of which are illustrated in the accompanying drawings wherein like numerals indicate the same elements throughout the views. For purposes of clarity and simplicity, the following terms are used herein.

As used herein, the term "system" is intended to refer to any set of components, processes, operations, or functions which deliver a product or service. Exemplary systems include manufacturing and production systems, airline flight operations, maintenance operations, queuing operations (e.g., traffic control, reduction of waiting time in lines or queues such as bank teller windows, gas pump, grocery checkout, etc.), industrial and military asset deployment (e.g., troop deployments, air wing sizing, rental car and truck fleet sizing, warehouse and transportation logistics).

As used herein, the term "loss event" is intended to refer to any event which negatively affects the performance or function of a system or one of its components (e.g., system stops or component downtime, product quality decreases, increased operator intervention, idle trucks or cars, empty lines or queues), wherein each loss event has a cause and a failure mode associated therewith.

As used herein, the term "failure mode" is intended to refer to a description of how a system can fail to perform its intended function. Each failure mode can have associated therewith one or more causes; a downtime during which the failure mode has caused a system, or component thereof, to cease to perform its intended function; and an uptime until the next occurrence of a failure mode, during which time a system, or component thereof, is performing its intended function.

As used herein, the term "cause" is intended to refer to the reason why a failure mode occurs.

As used herein, the term "life" is intended to refer to the time from a starting point to the occurrence of an end point.

As used herein, the term "competing cause failure mode" (CCFM) is intended to refer to a failure mode which occurs according to its own distribution, which is independent of the distributions of other failure modes and where the competing cause failure mode's uptime terminates at the occurrence of any loss event. In simulations of the present invention, the uptime of each competing cause failure mode is regenerated after the occurrence of any loss event as if anew.

As used herein, the term "cumulative cause failure mode" (CMFM) is intended to refer to a failure mode which occurs according to its own distribution, which is independent of the distributions of other failure modes and where the cumulative cause failure mode's uptime is not affected by the occurrence of loss events unrelated to the subject cumulative cause failure mode. In simulations of the present invention, the uptime of each cumulative cause failure mode is only regenerated anew after its expiration.

As used herein, the term "false start event" is intended to refer to a loss event which occurs quickly relative to the expected life of a system (e.g., two minutes or less for a manufacturing system which may have an average expected life of twenty to thirty minutes) after a system, or component thereof, resumes acceptable operation.

As used herein, the term "series system" is intended to refer to a system which fails if any of its components fail.

As used herein, the term "parallel system" is intended to refer to a system which fails if all of its parallel components fail.

As used herein, the term "uptime" is intended to refer to the period of time or life of a system, or component thereof, during which it is performing its intended function.

As used herein, the term "downtime" is intended to refer to the period of time or life of a system, or component thereof, during which it is not performing its intended function due to a loss event.

As used herein, the term "availability" is intended to refer to ratio of total uptime for a system to the sum of the total uptime for a system plus the total downtime for a system.

As used herein, the term "Mean Time Between Failures" (MTBF) is intended to refer to as the ratio of the total uptime for a system over the total number of loss events for the system.

As used herein, the term "Mean Time To Repair" (MTTR) is intended to refer to ratio of the total downtime for a system over the total number of loss events for the system.

As used herein, the term "parameterize" is intended to refer to the process of characterizing or fitting data according to a parametric equation (e.g., equations containing parameters of shape, scale, and location to describe data, such as Weibull equations, log-normal equations, normal equations, etc.).

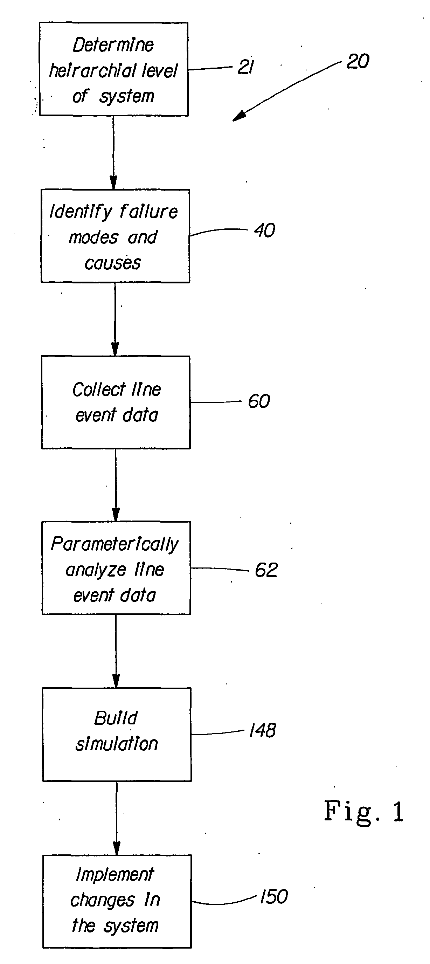

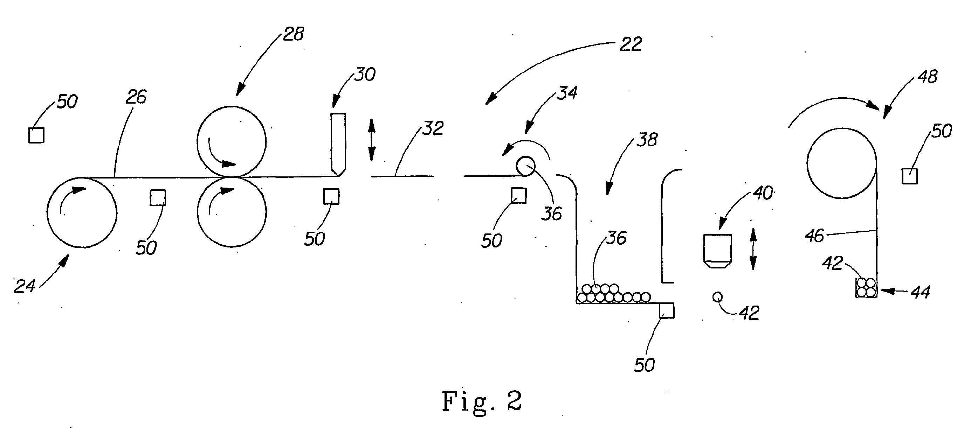

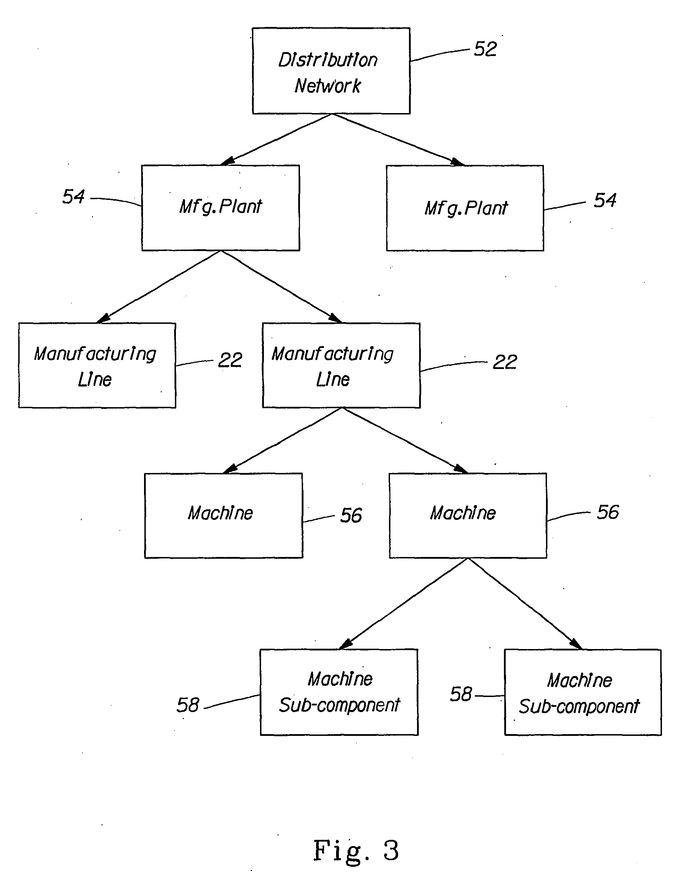

Referring now to Fig. 1 and in accordance with one aspect of the present invention, a process for analyzing and/or simulating an exemplary system will now be described. The process 20 begins at step 21 where a hierarchial level of the system is selected. The hierarchial level defines the system to be analyzed and represents the depth to which the components of a system are simulated. For ease of discussion, the present invention will be described herein with respect a system in the form of a manufacturing system and the machines which form part of the manufacturing system. More particularly, the present invention will be described herein with respect to a series towel manufacturing system 22 as schematically illustrated in Fig. 2. The manufacturing system 22 comprises a sheet roller 24 having wound thereabout a paper sheet 26 having a finite length. The sheet 26 passes through an embosser 28 which imprints a pattern upon the sheet 26. The sheet 26 is cut in the machine direction into discrete portions 32 at a first cutter 30. The portions 32 are wrapped about a cylindrical paper core at the core roller 34 after which the rolled portions 36 are deposited in an accumulator 38. The rolled portions 36 are next cut in the cross machine direction at the second cutter 40. The twice cut rolled portions 42 are delivered to a wrapper 44 which wraps a plurality of the rolled portions 42 in a polymeric film 46 which is drawn from a polymer roller 48. A plurality of sensors 50 are distributed throughout the manufacturing system 22 to detect loss events of the manufacturing system, as discussed more fully hereafter. While the manufacturing system 22 is described herein at a machine hierarchial level, it will be appreciated that the manufacturing system 22 can be described at higher and lower hierarchial levels based upon the analysis objective and desired level of simulation accuracy and that these various levels can be simulated collectively or individually as desired. Fig. 3 sets forth various illustrative hierarchies above and below that described for the manufacturing system 22 of Fig. 2. For instance, a higher hierarchial level might include a distribution network 52 comprising a plurality of manufacturing plants 54 (a parallel system), each of which have a plurality of the manufacturing systems 22, wherein the manufacturing systems 22 have a plurality of machines 56 (e.g., the roller 24) associated therewith and each machine 56 has a plurality of sub-components 58 (e.g., a roller bearing for the sheet roller 24). Further, while the present invention is described herein with respect to a manufacturing system, it will be readily appreciated that other products, services, manufacturing systems, and systems are suitable for use with the present invention as previously described.

Referring again to Fig. 1, the system hierarchy selected at step 21 is analyzed to identify its cumulative and competing failure modes and their causes. Set forth in Table 1 below is an illustrative listing of cumulative and competing failure modes and their causes for the manufacturing system 22.

TABLE 1

| Machine | Failure Mode No. | Failure Mode | Failure Mode Type | Failure Mode Causes | No. of downtime distributions |
|---|---|---|---|---|---|
| Sheet Roller | 1 | Sheet jam | Competing | Sheet break - hole in sheet<br>Sheet break - glue buildup | 3 |
| | 2 | Roller change | Cumulative | Wear out-bearing failure | 1 |
| | 3 | Belt failure | Cumulative | Belt break | 1 |
| Embosser | 4 | Infeedjam | Competing | Glue on roll | 1 |
| First Cutter | 5 | Blade failure | Competing | Drive belt slipping | 1 |
| Core Roller | 6 | Core misalignment | Competing | Short core | 1 |
| Accumulator | 7 | Accumulator full | Competing | Accumulator full | 1 |
| Second cutter | 8 | Blade failure | Competing | Blade wear | 1 |
| Polymeric roller | 9 | Roller change | Cumulative | Roll expired | 1 |
| Wrapper | 10 | Polymer sheet jam | Competing | Drive setup wrong | 1 |
| | 11 | Polymer sheet alignment | Competing | Registration marks not aligned | 1 |

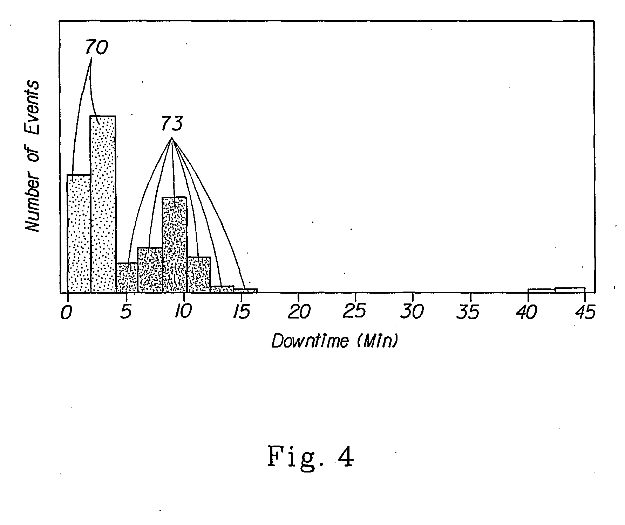

By way of example with respect to Table 1, the sheet roller 24 has three failure modes: two cumulative cause failure modes and one competing cause failure mode. Whether a failure mode is cumulative or competing can be based upon the cause of the failure mode or rules of construction (e.g., all failure modes are competing unless identified otherwise). The rules of construction can be tailored according to the objectives or use of the simulation. The sheet jam failure mode is competing, because, sheet instabilities can cause a sheet jam anew after repair of any loss event. The belt failure and roller change (i.e., replacement of the roll because the sheet is depleted) failure modes are cumulative, because they are dependent upon the finite life of the belt and sheet irrespective of other unrelated loss events. The failure modes can have multiple causes (see, e.g., failure mode number 1 in Table 1) and downtime distributions. Further, the failure modes do not necessarily have a correspondence between the number of failure mode causes and the number of downtime distributions. The downtime distributions represent independent, identically distributed repair time characteristics for a single failure mode. For instance, the sheet jam failure mode has three downtime distributions, such as a short repair time period, a medium repair time period, and a long repair time period. Selection of the number of downtime distributions can be determined using methods known in the art, such as segmented regression wherein discontinuities between segments each represent a separate distribution. The probability C of falling within any given downtime distribution is determined by the ratio of the number of loss events within a downtime distribution over the total number of loss events for the subject failure mode. For example with reference to Fig. 4, an exemplary plot for the sheet jam competing cause failure mode of the sheet roller 24 is illustrated. The total number of loss events illustrated in Fig. 4 is 188. For the first downtime distribution 70, the number of loss events is 109 and therefore the probability C of a downtime occurring in the first downtime distribution 70 is 0.58. Similarly, the number of loss events for the second downtime distribution 73 is 76 and therefore the probability C of a downtime occurring in the second downtime distribution is 0.40.

Referring again to Fig. 1 and the process 20, time-based system loss event data (e.g., uptimes, downtimes) is collected from the manufacturing system 22 and parametrically analyzed at steps 60 and 62 once the hierarchial level of the manufacturing system 22 has been selected. The collection of this system loss event data is used to characterize and quantify the failure modes of the manufacturing system 22. The system loss event data which is collected preferably includes failure mode causes, time stamps marking the beginning and end of uptime and downtime periods, and the absolute time of uptime periods and downtime periods. Depending upon the failure mode cause, various detection techniques can be employed for collection of the data. Illustrative methods are set forth in Table 2 below.

TABLE 2

| Detection Method | Description |
|---|---|
| Sensor 50 equals failure mode cause | The type and location of the sensor 50 is specific to a single failure mode cause |
| Sensor 50 approximately equals the failure mode cause | Multiple failure mode causes may trigger the sensor 50, but generally one failure mode cause predominates |
| Sensors 50 and logic/timing equals the failure mode cause | Logic and timing combinations of sensors 50 can be used to deduce a single failure mode cause |
| Operator input | No reliable method based on sensors can detect the failure mode cause and an operator must make an entry |

As indicated, the system loss event data can be collected using the sensors 50 and/or programmable logic controllers (or PLCs). Illustrative system loss event data for the manufacturing system 22 is set forth below in Table 3. Enough data should be collected for each failure mode to establish a statistical sample. More preferably, at least about 3 events are recorded for each failure mode. Most preferably, between about 15 events and about 30 events are recorded for each failure mode. The system loss event data can also include other information, such as a date stamp. While Table 3 is directed to system loss event data for a manufacturing system, other data types can be monitored for other systems, such as idle time for queue systems (e.g., gas pump available but idle).

TABLE 3

| Event | Uptime (minutes) | Event beginning time stamp (minutes) | Downtime (minutes) | Event ending time stamp (minutes) | Failure mode no. |
|---|---|---|---|---|---|
| 1 | 25.1 | 25.1 | 6.8 | 31.9 | 6 |
| 2 | 35.4 | 67.3 | 5.1 | 72.4 | 8 |
| 3 | 36.8 | 109.2 | 2.5 | 111.7 | 1 |

(continued)

| Event | Uptime (minutes) | Event beginning time stamp (minutes) | Downtime (minutes) | Event ending time stamp (minutes) | Failure mode no. |
|---|---|---|---|---|---|
| 4 | 14.3 | 126.0 | 3.2 | 129.2 | 11 |
| 5 | 0.4 | 129.6 | 10.3 | 139.9 | 6 |
| 6 | 1.4 | 141.3 | 8.6 | 149.9 | 2 |

Once the system loss event data has been collected, it is next parameterized at step 62 of the process 20. The system loss event data can be parameterized using one of several statistical distribution/function types known in the art, such as an exponential distribution, a normal distribution, a Weibull distribution, or a log normal distribution. The Weibull distibution (in particular the Weibull Probability Density Function or PDF) is particularly useful for characterizing uptimes while downtimes are typically characterized according to a log normal distribution. False start events are preferably calculated according to the following equation:

$$\text{False start probability (P)} = 1 - \frac{\text{(total number of false start events for a failure mode)}}{\text{total number of loss events for the system}} \quad (1)$$

Thus, a false start probability P of 0.97 (or 97%) means that 97% of the time, there is not a false start for this failure mode following any loss event for any failure mode. A typical Weibull PDF for uptime has the following form:

$$\text{Probability of Failure} = (\text{Beta/alpha}) (\text{uptime/Alpha})^{(\text{Beta-1})} e^{(-(((\text{uptime/alpha})\text{Beta})))} \quad (2)$$

Wherein the Alpha and Beta constants are the customary Weibull constants (i.e., alpha is the scale parameter and beta is the shape parameter) known in the art. Equation (2) can be rearranged to the following form when solved for uptime:

$$\text{Uptime} = \text{Alpha}(-\ln (\text{probability of failure}))^{(1/\text{Beta})} \quad (3)$$

Equation (2) can be used to calculate uptimes based upon generation of a random probability, wherein a uniform random real number between zero and one is used for the probability of failure. Any log-normal equation known in the art, having parameters sigma (i.e., the standard deviation of the log of the downtimes) and mu (i.e., the mean of the log of the downtimes), can be used to parameterize a downtime distribution. Purely for purposes of discussion herein, the uptime distributions for the failure modes of the manufacturing system 22, as set forth in Table 1, are parametrized using a Weibull PDF and the downtimes are characterized using a log-normal function, wherein the probability constant C represents the probabilities among the various downtime distributions. It is should be noted that the summation of the constant C values of any single failure mode must equal one, because the downtime from any loss event must fall into one of the subject downtime distributions for the failure mode of that loss event. The false start probability of each failure mode is represented by a constant P. Illustrative alpha, beta, mu, sigma, and C and P constants for each failure mode are set forth below in Table 4. As previously discussed, some of the failure modes have more than one downtime distribution. For example, a belt driven roller might fail because of failure of a driving belt. The roller might be quickly repaired if multiple belts are hung about the driving pulleys such that disassembly of the roller structure is not required for the repair and a short repair time occurs. However, once the last repair belt has been used, disassembly of the roller structure would be required resulting in a longer repair time distribution than if a repair belt had been available. Multiple downtime distributions are also useful for modeling failure modes having more than one cause, where each cause has a separate downtime repair distribution. The number of downtime distributions can be selected using one of several techniques known in the art (e.g., segmented regression).

TABLE 4

| Simulation Object | Rate Constant R (ft/minute) | Failure Mode No. | Failure Mode | Uptime (minutes) AlphaBeta | Downtime (minutes) C/mu/sigma | False Start P |
|---|---|---|---|---|---|---|
| Sheet Roller | 180 | 1 | Sheet jam | 36,801/0.8 | 0.6/2.6/1.1; 0.35/5.8/2; 0.05/43/2 | 0.97 |
| | | 2 | Roll change | 63,400/15 | 1/3/1.8 | 0.96 |
| | | 3 | Belt failure | 890,000/14.6 | 1/56/2.5 | 0.98 |
| Embosser | 180 | 4 | Infeedjam | 345,672/0.6 | 1/1.2/0.7 | 0.99 |
| First Cutter | 180 | 5 | Blade failure | 200/1.2 | 1/180/5.6 | 0.97 |
| Core Roller | 180 | 6 | Core misalignment | 947,505/0.4 | 1/1.8/0.78 | 0.97 |
| Accumulator | 180 | 7 | Accumulator full | 29,023/0.8 | 1/3.6/0.98 | |
| Second Cutter | 250 | 8 | Blade failure | 3,984/0.93 | 1/21/0.9 | 0.9 |
| Polymer roll | 250 | 9 | Polymer roll change | 200/1.3 | 1/3.9/1.32 | 0.9 |
| Wrapper | 250 | 10 | Polymer sheet jam | 2,900/0.87 | 1/0.98/0.97 | 1 |
| | | 11 | Polymer sheet alignment | 9E+10/0.2 | 1/0.798/1.6 | 0.98 |

Also, listed in Table 4 is a rate constant R which represents a steady state product rate value for a simulation object (e.g., 180 feet per minute of sheet feed for the sheet roller).

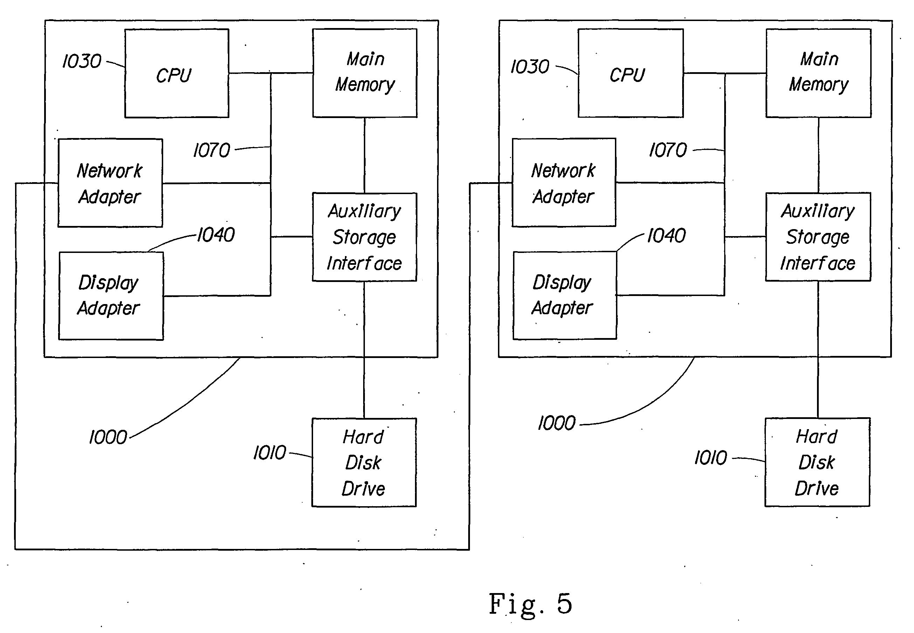

After completing the collection and parameterization of the system loss event data at steps 60 and 62 of process 20 of Fig. 1, a computer program modeling or simulating the manufacturing system 22 is constructed in accordance with another aspect of the present invention. The simulation program is executed or run on any general or special purpose computer or other digital processing apparatus, such as a desktop computer, a server and/or client computer interconnected by a network (for example, either via the Internet or an Intranet), a micro-computer, hand-held organizers and other forms of computers and computer systems as otherwise known in the art. Exemplary networked computers 1000 are illustrated schematically in Fig. 5. The computer preferably comprises a logic circuit (such as central processing unit 1030, microprocessor or other micro controller) capable of executing the simulation program. The simulation program, or portions thereof, can be provided as a program product, wherein the program product includes a signal bearing medium which can be configured to store data and/or machine readable instructions which cause the logic circuit to which it is connected to perform the simulation steps discussed hereafter. The signal bearing medium can be provided in the form of an optical disk, a magnetic disk, a magnetic hard drive (e.g., reference numeral 1010), a magnetic tape, RAM, ROM, or any other magnetic, optical, or other computer readable storage medium. Alternatively, the program product can be distributed with the instructions contained in other signal bearing media including digital and analog communication links (e.g., such as a wire or fiber portion of a local area network, a wire or fiber portion of a wide area network, a portion of a wireless network, etc.), a carrier wave or propagated signal, and other forms of transmission media. The computer also preferably comprises one or more input/output peripherals, such as a keyboard, mouse, touch screen, microphone, display monitor, printer, etc., which can be interconnected with the logic circuit via a system bus and adapter (e.g., display adapter 1040). While the step 148 of Fig. 1 is preferably computerized, it will be appreciated that the other steps (or portions thereof) of the process 20 can be implemented by or in combination with a digital processing apparatus.

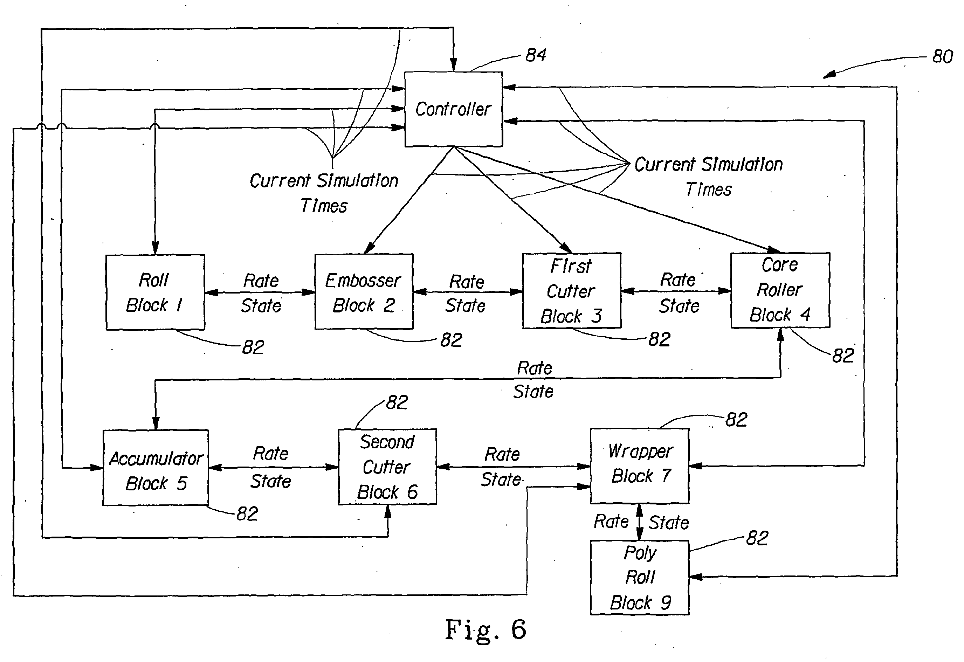

Referring to Fig. 6, a preferred simulation program 80 comprises a plurality of simulation objects 82 and a controller 84, wherein each simulation object 82 represents a physical component of the modeled system (e.g., a plant, a manufacturing line, a machine, a component, a queue, etc.). The simulation program can be implemented using any one of a number of object oriented or non-object oriented programming languages known in the art (e.g., C, C++, EXCEL macros, etc.). In this instance, the simulation objects each represent a machine 56 of the manufacturing system 22 and comprise instructions and/or data which describe the operation of that machine. Thus, there are simulation objects illustrated in Fig. 6 for each of the sheet roller 24, the embosser 28, the first cutter 30, the core roller 34, the accumulator 38, the second cutter 38, the polymeric roller 42, and the wrapper 44. The simulation objects 82 are interconnected with their corresponding upstream and downstream simulation objects such that a virtual representation of the manufacturing system 22 is arranged. The simulation objects 82 preferably send to their immediately adjacent upstream and downstream simulation objects the simulated rate (e.g., a linear rate in feet/minute of the sheet 26 between simulation object 1 and simulation object 2) and the simulated state of the simulation object (e.g., either stopped or operational). The controller 84 coordinates the simulation time (hereinafter "the current simulation time") among the various simulation objects 82. Preferably, the coordination is accomplished by each simulation object transmitting its uptime and/or downtime to the controller 84 as each simulation object encounters a simulated loss event (e.g., a stop). As a simulated loss event is encountered, the controller 84 advances the current simulation time according to the downtime or uptime calculated at a simulation object, as described more fully hereafter.

Referring to Figs. 6 to 8, an exemplary process 86 implemented in combination with a simulation object 82 in accordance with yet another aspect of the present invention will now be described. The steps of the process are described both generically for any simulation object 82 and by way of example to the sheet roller simulation object, although it will be appreciated that these steps can be similarly implemented for the other simulation objects 82 of the simulation 80. While the steps of the process 86 are described herein with respect to simulation objects, some steps implemented by the controller 84 are also incorporated into the process 86 for ease of discussion. It will be further appreciated that the steps of the process 86 and the arrangement of the simulation objects and controller can be modified, rearranged, combined, and separated as is known in the art without departing from the scope of this invention.

The process 86 begins at step 88 where the parameters (e.g., constants P/C/R, Alpha, Beta, mu, sigma, etc.) for the uptime and downtime distributions, rates, and false start probabilities of the simulation object 82 are preferably read from an input file or the like. Once each simulation object 82 is so initialized, a false start probability array is generated at step 89, wherein the array preferably has the structure set forth in Table 5 below. The first column is the false start probability constant P while the second column is the difference of one minus the false start probability P. The third column is the quotient of one minus the false start probability constant P over the sum of one minus the false start probability constant P from column 3. The fourth column is the running summation of the third column.

TABLE 5

| Failure Mode Number | False Start Probability P | 1-P | (1-P)/(sum(1-P)) | Sum |
|---|---|---|---|---|
| 1 | 0.97 | 0.03 | 0.3333 | 0.3333 |
| 2 | 0.96 | 0.04 | 0.4444 | 0.7777 |
| 3 | 0.98 | 0.02 | 0.2222 | 1 |

Next, a target false start probability is summed for the competing cause failure modes of the simulation object according to the following equation at step 90:

$$\text{Target false start probability} = 1 - \Sigma \, (1 - \text{false start probabilities P}) \quad (4)$$

After determining the target false start probability at step 90, a uniform random real number between zero and one is generated at step 94 and this uniform random real number is used to calculate an uptime for each cumulative cause failure mode for the subject simulation object 82 based upon equation (2) above. For example, the sheet roller 24 has the roller change and belt failure cumulative cause failure modes, as listed in Tables 1 and 4. The illustrative alpha and beta values for failure mode number 2 listed in Table 4 are 63,400 and 15, respectively. For a uniform random real number value of 0.54, this cumulative cause failure mode would have an uptime of 63,346 minutes, respectively, at step 94. These uptime values are preferably stored in an array or other data structure which is updated as the simulation 80 is executed.

Steps 96 to 106 are next executed to calculate a competing cause failure mode false start error. At step 96, a loss event counter storing the total number of simulated loss events (i.e., both competing cause and cumulative cause failure mode loss events) is incremented as each loss event is encountered. If the previous loss event for the simulation object was due to a competing cause failure mode and was a false start as indicated at step 98, step 100 is executed, wherein a counter summing the number of competing cause failure mode false starts is incremented by one. Otherwise directly execute step 102, wherein the simulation's false start event probability is calculated according to the following equation:

$$\text{Simulation false start prob.} = \frac{\text{Total number of CCFM false start events}}{\text{Total number of simulation loss events}} \qquad (5)$$

The total number of simulation loss events in the denominator of equation (5) was previously calculated at step 96, and the total number of competing cause failure mode false start events in the numerator of equation (5) was previously calculated at step 100. The error between the simulation's false start probability and the target false start probability is next calculated according to the following equation at step 106:

$$\text{Error} = \text{Simulation false start probability} - \text{Target false start probability}$$

Once the error has been calculated, a corrected simulation false start probability is calculated at step 106 based upon the calculated error. Any error correction methodology known in the art can be employed to calculate the corrected simulation false start probability value (e.g., a binary search). While an error correction is described herein for simplicity with respect to false starts following a competing cause failure mode, it will be appreciated that an error correction could be similarly implemented for false starts following a cumulative cause failure mode.

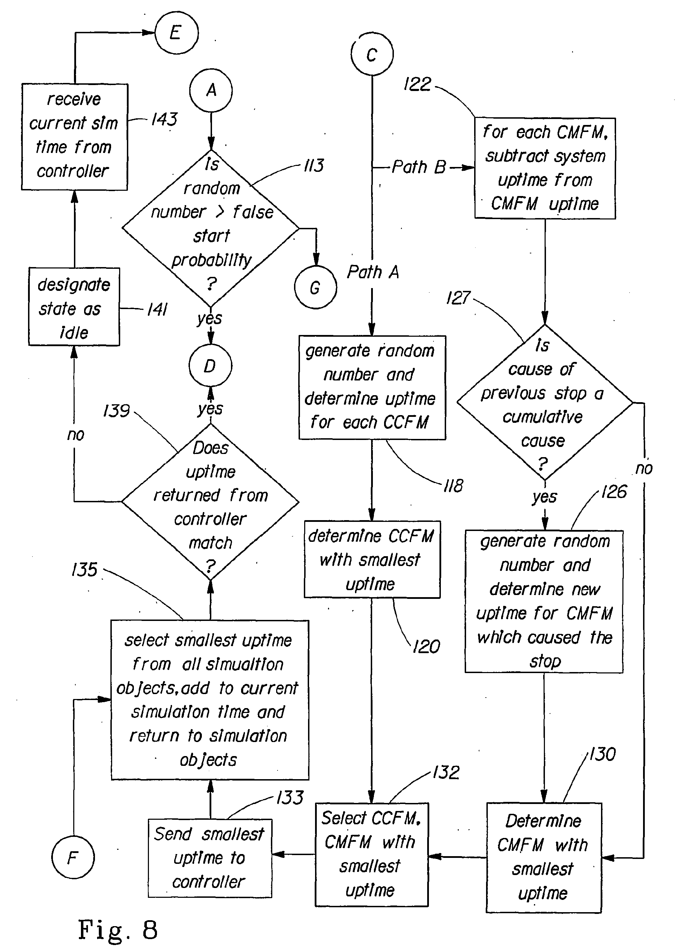

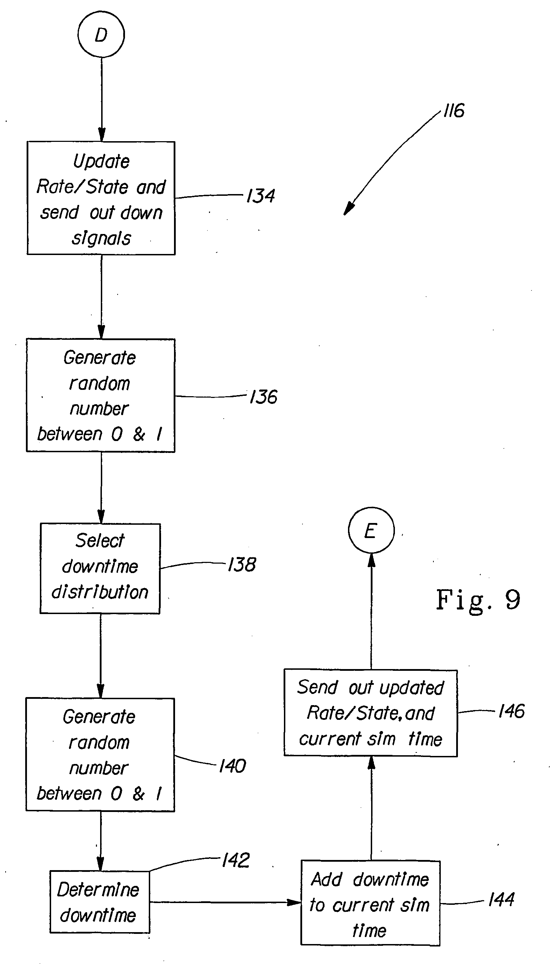

At step 110, it is determined whether the previous loss event was due to a competing cause failure mode, or whether it was due to a cumulative cause failure mode. If it is due to competing cause failure mode, steps 112 and 114 are used to determine if there is a false start following the downtime (i.e., following the repair time) for the previous loss event while accounting for the corrected simulation false start probability determined at step 106. If the previous loss event is due to a cumulative cause failure mode, then steps 111 and 113 (Fig. 8) are executed. At step 111, a uniform random real number between zero and one is generated. If the uniform random real number is less than or equal to the false start probability P of the previous cumulative cause failure mode, as described at step 113, then there is a false start following this loss event. The downtime for this false start event is next generated using process 116 (Fig. 9), as discussed more fully hereafter; otherwise there is no cumulative cause false start following the previous cumulative cause loss event and step 112 is next executed to determine if there is a competing cause false start event beginning with step 112, as also discussed more fully hereafter.

At step 110, if the previous stop was for a competing cause loss event (or if step 110 is executed for the first time at startup of the simulation), steps 112 and 114 are performed. A uniform random real number between zero and one is generated at step 112 and if this uniform random real number is greater than or equal to the corrected simulation false start probability determined at step 106, then there is no false start following the previous loss event, then parallel paths A and B (Fig. 8) are performed to determine the next minimum uptime for the subject simulation object 82. If the uniform random real number generated at step 114 is greater than the corrected false start probability determined at step 106 (i.e., there is a false start event following the previous loss event), then a new uniform random real number is generated at step 115 and this number is compared to the fourth column of the array generated at step 89 to determine which failure mode of the subject machine step has caused the false start. For example with reference to Table 5, if the uniform random real number generated at step 115 is 0.85, then failure mode number 3 would be used to determine the downtime for the false start event because 0.85 is greater than 0.7777 but less than 1. After determining which failure mode causes the false start event, the downtime process 116 (Fig. 9) is next executed to determine the downtime for the false start event.

Referring to Fig. 8, parallel path A calculates the uptimes for each competing cause failure mode of the subject simulation object while parallel path B generates the uptimes for each cumulative cause failure mode of the subject simulation object. Beginning at step 118 for path A, a uniform random real number between zero and one is separately generated for each competing cause failure mode of the simulation object. Each uniform random real number is applied to equation (3), wherein equation (3) incorporates the alpha and beta for the failure mode corresponding with the generated uniform random real number. For example, Table 6 lists the uniform random real number generated for each competing cause failure mode of the sheet roller 24. Using the alpha and beta for each failure mode, an uptime is calculated based upon the generated uniform random real number for a competing cause failure mode. The smallest competing cause failure mode simulation time is next selected at step 120 from among all the competing cause failure mode simulation times for the subject simulation object and this value is forwarded to step 132.

TABLE 6

| Failure Mode | Alpha/beta | Random No. | Current Simulation Time | Uptime (minutes) | Competing cause failure mode simulation time |
|---|---|---|---|---|---|
| Sheet jam | 36,801/0.8 | 0.14 | 10 | 84,308 | 84,318 |

Referring now to parallel path B of Fig. 8, the smallest uptime among the cumulative cause failure modes for the subject simulation object 82 is determined at steps 122 to 130. At step 122, for each cumulative cause failure mode of the subject simulation object 82, the system uptime is subtracted from the cumulative cause failure mode uptime of each cumulative cause failure mode and these new values are stored in the array. At step 124, it is determined whether the cause of the previous loss event is a cumulative cause. If yes (e.g., a cumulative cause failure mode has caused a stop), then a new cumulative cause failure mode uptime is calculated for that cumulative cause failure mode by generating a uniform random real number between zero and one at step 126; otherwise, step 130 is executed as discussed below. Using equation (3) and the alpha and beta for the subject cumulative cause failure mode, the new uptime is calculated which replaces the expired cumulative cause failure mode uptime in the array. The smallest cumulative cause failure mode uptime is next selected from among all the cumulative cause failure mode uptimes in the array for the subject simulation object 82 at step 130. Next, the smallest uptime value between step 130 and step 120 is selected at step 132 to determine which competing cause failure mode or cumulative cause failure mode will cause the next loss event for the subject simulation object 82.

After determining which failure mode causes the next loss event for the simulation object, this smallest failure mode uptime is sent to the controller 84 at step 133. At step 135, the controller 84 selects the smallest failure mode uptime from among all the simulation objects (the "system uptime"), including from any accumulator product level loss events (discussed more fully hereafter as another preferred embodiment), and adds that uptime to the current simulation time, thereby advancing the simulation to the beginning of the loss event. The system uptime is returned to each simulation step. At step 139, each simulation object determines whether its failure mode uptime determined at step 132 matches the returned system uptime. If it does, then execution passes to the downtime process 116 which is performed beginning with step 134 (i.e., that simulation object is the one encountering the loss event), as shown in Fig. 9; otherwise, steps 141 and 143 are performed wherein the simulation object enters a "wait or idle" state at step 141, wherein each simulation object awaits input from its adjacent simulation objects and/or the controller. Referring to Fig. 9 and the downtime process 116, updated rate and state information is sent to each adjacent simulation object at step 134, which generally for a loss event is a rate of zero and a state indicator that the subject simulation object 82 has stopped. The state indicators are merely used to coordinate events among the simulation objects. A uniform random real number between zero and one is generated at step 136, and this number is used at step 138 to select which downtime distribution will be used to calculate the downtime for the particular loss event by comparing each downtime constant C to the uniform random real number. The constants C are sequentially summed and the uniform random real number is compared to the range in between the summations to determine which downtime distribution to use. For example with reference to Tables 4, failure mode 1, and Table 7, if the uniform random real number generated at step 136 is 0.85, then the downtime distribution # 2 from Table 4 would be used to determine the downtime because 0.85 is greater than 0.6 but less than 0.95.

TABLE 7

| Downtime Distribution No. | Constant C | Summation of constant C values | Range between summations | Random No. |
|---|---|---|---|---|
| 1 | 0.6 | 0.6 | $0 \leq$ random number $\leq 0.6$ | |
| 2 | 0.35 | 0.95 | $0.6 <$ random number $\leq 0.95$ | 0.85 |
| 3 | 0.05 | 1.0 | $0.95 <$ random number | |

At step 140, a new uniform random real number between zero and one is generated. This uniform random real number is used with equation (4) to determine the downtime for the loss event at step 142 using the downtime distribution parameters for the downtime distribution determined at step 136. The downtime calculated at step 142 (the system downtime) is sent to the controller 84 at step 144. The controller adds the system downtime to the current simulation time (i.e., the simulation time is now advanced to the end to the repair period) and forwards the current simulation time to each of the simulation objects at step 144 (this information being received by the simulation objects at step 143). The rate and state for the subject simulation object 82 which caused the loss event are next updated and sent to the adjacent simulation objects at step 146, wherein generally the rate is set to the rate constant (e.g., 180 ft/minute for the sheet roller 24) and the state is updated to running. Execution, for all simulation objects 82 then resumes at point E of Fig. 6, wherein the false start probability error correction begins at step 96.

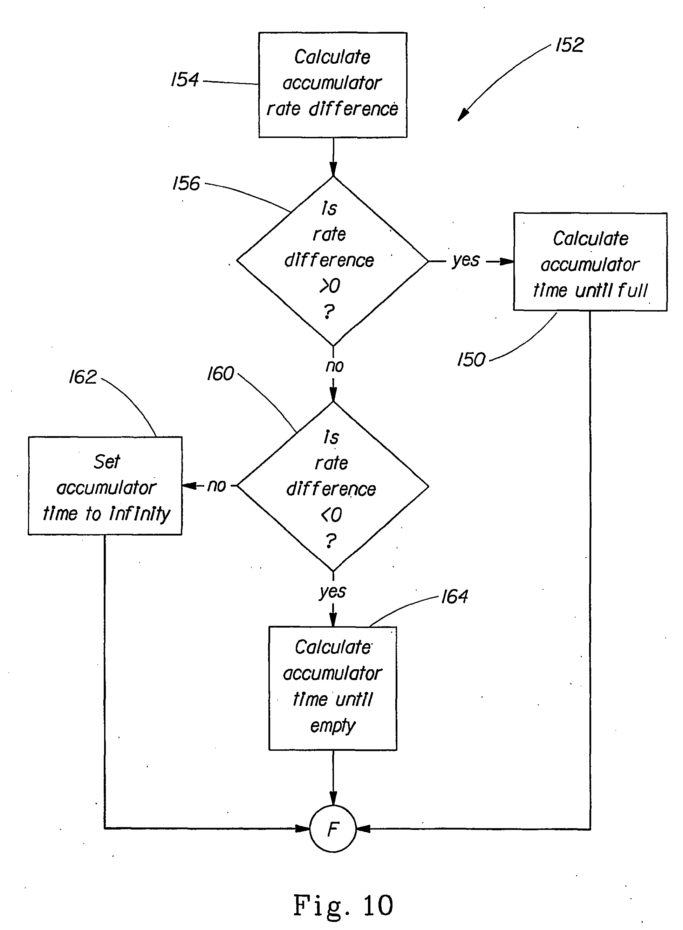

An alternate preferred embodiment of the present invention incorporates the process 152 illustrated in Fig. 10 for simulation objects modeling storage or buffer components, such as the accumulator 38. Each accumulator has an empty product level value (i.e., the value at which there is no product in the accumulator), a current product level value (i.e., the current value for the amount of product in the accumulator), and a full product level value (i.e., the value at which the accumulator is completely filled with product and can accept no more). Beginning at step 154, the difference between the rate of product into the accumulator and the rate of product out of the accumulator is calculated. By way of example with respect to the simulation 80, the rate of product into the accumulator 38 of the manufacturing 22 is the difference between the rate constant for product delivered from the simulation object 82 representing the core roller 82 and the rate constant for the product received by the simulation object 82 representing the second cutter 40. If the difference is greater than zero at step 156, then step 158 is performed, wherein it is determined how long it is before the accumulator 38 is full by subtracting the full product level value from the current product level value and dividing this difference by the rate difference calculated at step 154. This value is then summed with the current simulation time received by the simulation object 82 for the accumulator at step 143 of Fig. 6 and sent to step 132. This accumulator level simulation time value (which represents a loss event) is then compared to the smallest competing cause and cumulative cause simulation times of step 132. Referring to step 160, if the rate difference is less than zero then step 162 is executed, whereat it is determined how long it is before the accumulator 38 is empty by subtracting the current product level value from the empty product level value and dividing this difference by the rate difference calculated at step 154. This value is then summed with the current simulation time received by the simulation object 82 for the accumulator at step 143 of Fig. 6 and sent to step 132. This accumulator level simulation time value (which represents a loss event) is then compared to the smallest competing cause and cumulative cause simulation times of step 132. Otherwise step 164 is performed (i.e., the rate difference equals zero and the rate in equals the rate out), wherein the product level within the accumulator is constant and an accumulator level simulation time value of infinity is sent to step 132.

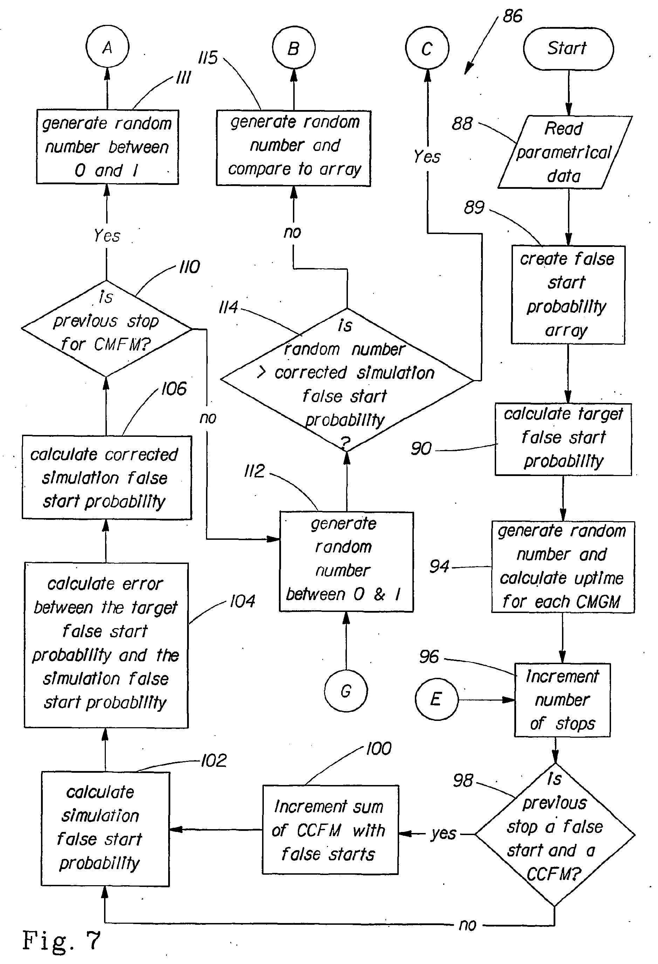

Referring to Table 8, six exemplary time steps (e.g., T=0 minutes, T =143 minutes, T=322 minutes, T=327 minutes, T=330 minutes, and T=350 minutes) for a simplified simulation in accordance with the present invention of the manufacturing system 22 will now be described. Each time step incorporates one or more steps of the previously described simulation processes and is intended to generally demonstrate the concepts described herein for further clarity. At the first time step (i.e., at T=0 minutes or the beginning of the simulation after initialization of the simulation), a uniform random real number is generated at the fourth column to determine whether there is a false start for the competing cause failure modes under the simplified assumption that there is not a cumulative cause false start at startup. The same single random real number is used for each competing cause failure mode of a machine object (i.e., steps 112 and 114 of Fig. 7) step and a separate random real number is generated for each cumulative cause failure mode when appropriate (i.e., when step 111 of Fig. 7 is executed). If there is a false start as determined at steps 113 or 114 of Fig. 7, a "yes" is indicated in fifth column. Since there is no false start for the first time step, a uniform random real number is generated for each failure mode and this uniform random real number is then used to generate an uptime. The smallest uptime for each simulation object is selected at the eighth column and then the smallest uptime for the system is selected at the ninth column. The system uptime is added to the current simulation time at the second time step (i.e., time T= 0+143 minutes). A uniform random real number is generated at the tenth column; however since there is only one downtime distribution, it is not does not affect which downtime distribution is selected. At the eleventh column, a random number is generated, which is then used to determine the downtime for failure mode number five. At the third time step, the downtime from the twelfth column is added to the simulation time (i.e., time T = 143 + 179). Uniform random real numbers are again generated at the fourth column for the false start probabilities (except the cumulative cause failure modes since the prior loss event was not due to a cumulative cause failure mode), and there are no false starts. New uptimes are generated for the competing cause failure modes only at seventh column based upon the uniform random real numbers listed in the sixth column. The uptimes for the cumulative cause failure modes at the seventh column are equal to the uptime from the first time step (i.e., at time T = 0) minus the system uptime calculated at the first time step. A new system uptime is selected at the tenth column (e.g., 5 minutes). Following the downtime calculation of fourth time step (i.e., at time T = 327 minutes), a false start occurs at the fifth time step (i.e., at time T = 330 minutes), whereat a downtime is calculated for the failure mode eight which caused the false start event. This is calculated according to steps 134 to 146 of Fig. 9. At the sixth time step (i.e., time T = 350 minutes), the downtime for the false start event calculated at the fifth time step is added to the current simulation time at the first column of the fifth time. The uptime for each competing cause failure mode is generated at the seventh column based upon the uniform random real numbers of the sixth column. Since there was no system uptime between the fourth and sixth time steps, the uptimes for the cumulative cause failure modes remain the same as the uptimes of the third time step.

TABLE 8

| Simulation time | Simulation object | Failure mode no. | Random no. for false start probability | False start? | Random no. for failure mode uptime | Failure mode uptime | Smallest failure mode uptime of object | mallest failure mode ptime of system | Random no. for lowntime stribution selection | Random no. for lowntime | Lowntime |
|---|---|---|---|---|---|---|---|---|---|---|---|
| T=0 | Sheet Roll | 1 | 0.23 | No | 0.14 | 84306 | | | | | |
| | | 2 | none | N/A | 0.54 | 63346 | 63346 | | | | |
| | | 3 | none | N/A | 0.83 | 598295 | | | | | |
| | Embosser | 4 | 0.42 | No | 0.63 | 90404 | 90404 | | | | |
| | First Cutter | 5 | 0.08 | No | 0.51 | 143 | 143 | 143 | | | |
| | Core Roller | 6 | 0.62 | No | 0.18 | 3575669 | 3575669 | | | | |
| | Accumulator | 7 | 0.057 | No | 0.47 | 20011 | 20011 | | | | |
| | Second cutter | 8 | 0.61 | No | 0.37 | 3906 | 3906 | | | | |
| | Polymer | 9 | none | N/A | 0.5 | 148 | 148 | | | | |
| | Wrapper | 10 | 0.8 | No | 0.5 | 1888 | 1888 | | | | |
| | | 11 | 0.8 | | 0.79 | 5411735 2 | 54117352 | | | | |
| T=1 43 | Sheet Roll | 1 | | | | | | | | | |
| | | 2 | | | | | | | | | |
| | | 3 | | | | | | | | | |
| | Embosser | 4 | | | | | | | | | |
| | First Cutter | 5 | | | | | | | 0.38 | 0.41 | 17 9 |
| | Core Roller | 6 | | | | | | | | | |
| | Accumulator | 7 | | | | | | | | | |
| | Second cutter | 8 | | | | | | | | | |

EP 1 287 410 B1

12

| Simulation time | Simulation object | Failure mode no. | Random no. for false start probability | False start? | Random no. for failure mode uptime | Failure mode uptime | Smallest failure mode uptime of object | mallest failure mode ptime of system | Random no. for lowntime stribution selection | Random no. for lowntime | Lowntime |
|---|---|---|---|---|---|---|---|---|---|---|---|
| | Polymer | 9 | | | | | | | | | |
| | Wrapper | 10 | | | | | | | | | |
| | | 11 | | | | | | | | | |
| T=3 22 | Sheet Roll | 1 | 0.38 | No | 0.71 | 9550 | | | | | |
| | | 2 | none | N/A | None | 63203 | 63346 | | | | |
| | | 3 | none | N/A | None | 698152 | | | | | |
| | Embosser | 4 | 0.73 | No | 0.48 | 198272 | 90404 | | | | |
| | First Cutter | 5 | 0.34 | No | 0.1 | 400 | 400 | | | | |
| | Core Roller | 6 | 0.82 | No | 0.32 | 126786 2 | 1267862 | | | | |
| | Accumulator | 7 | 0.16 | No | 0.57 | 14035 | 14035 | | | | |
| | Second cutter | 8 | 0.28 | No | 0.14 | 8207 | 8207 | | | | |
| | Polymer | 9 | none | N/A | None | 5 | 5 | 5 | | | |
| | Wrapper | 10 | 0.65 | No | 0.4 | 2622 | 2622 | | | | |
| | | 11 | 0.65 | No | 0.16 | 7.49E+ 09 | 7.49E+10 | | | | |
| T=3 27 | Sheet Roll | 1 | | | | | | | | | |
| | | 2 | | | | | | | | | |
| | | 3 | | | | | | | | | |
| | Embosser | 4 | | | | | | | | | |
| | First Cutter | 5 | | | | | | | | | |
| | Core Roller | 6 | | | | | | | | | |
| | Accumulator | 7 | | | | | | | | | |

EP 1 287 410 B1

(continued)

| Simulation time | Simulation object | Failure mode no. | Random no. for false start probability | False start? | Random no. for failure mode uptime | Failure mode uptime | Smallest failure mode uptime of object | mallest failure mode ptime of system | Random no. for lowntime stribution selection | Random no. for lowntime | Lowntime |
|---|---|---|---|---|---|---|---|---|---|---|---|
| | Second cutter | 8 | | | | | | | | | |
| | Polymer | 9 | | | | | | | 0.75 | 0.29 | 3 |
| | Wrapper | 10 | | | | | | | | | |
| | | 11 | | | | | | | | | |
| T=3 30 | Sheet Roll | 1 | 0.61 | No | | | | | | | |
| | | 2 | none | N/A | | | | | | | |
| | | 3 | none | N/A | | | | | | | |
| | Embosser | 4 | 0.38 | No | | | | | | | |
| | First Cutter | 5 | 0.32 | No | | | | | | | |
| | Core Roller | 6 | 0.78 | No | | | | | | | |
| | Accumulator | 7 | 0.487 | No | | | | | | | |
| | Second cutter | 8 | 0.99 | Yes | | | | | 0.45 | 0.41 | 20 |
| | Polymer | 9 | 0.31 | No | | | | | | | |
| | Wrapper | 10 | 0.7 | No | | | | | | | |
| | | 11 | 0.7 | No | | | | | | | |
| T=3 50 | Sheet Roll | 1 | 0.7 | No | 0.02 | 63197 | 63197 | | | | |
| | | 2 | none | N/A | None | 63203 | | | | | |
| | | 3 | none | N/A | None | 698152 | | | | | |
| | Embosser | 4 | 0.83 | No | 0.86 | 10021 | 10021 | | | | |
| | First Cutter | 5 | 0.81 | No | 0.21 | 288 | 288 | 288 | 0.53 | 0.65 | 18 2 |
| | Core Roller | 6 | 0.05 | No | 0.61 | 152322 | 152322 | | | | |

EP 1 287 410 B1

14

| Simulation time | Simulation object | Failure mode no. | Random no. for false start probability | False start? | Random no. for failure mode uptime | Failure mode uptime | Smallest failure mode uptime of object | mallest failure mode ptime of system | Random no. for lowntime stribution selection | Random no. for lowntime | Lowntime |
|---|---|---|---|---|---|---|---|---|---|---|---|
| | Accumulator | 7 | 0.45 | No | 0.92 | 1300 | 1300 | | | | |
| | Second cutter | 8 | 0.67 | No | 0.98 | 378 | 378 | | | | |
| | Polymer | 9 | none | N/A | None | 488 | 488 | | | | |
| | Wrapper | 10 | 0.56 | No | 0.77 | 625 | 625 | | | | |
| | | 11 | 0.56 | No | 0.46 | 2.54E+ 10 | 2.54E+10 | | | | |

EP 1 287 410 B1

Referring again to Fig. 1, after the simulation 80 is built at step 148 as described above, the simulation 80 can be used to analyze the manufacturing system 22 and implement changes in the manufacturing system 22 to improve its reliability, as described at step 150. For instance, the size of the accumulator 38 might be changed, the rate constants for a machine might be adjusted, the arrangement of machines in the manufacturing system might be changed, the value of eliminating a failure mode, etc. In addition, the system data can be used to model a second, yet to be built, manufacturing system having similar system objects, perhaps arranged in a different manner, in order to predict and optimize the reliability of the second system prior to building it.

Set forth below are examples of availability, MTBF, and MTTR for an existing manufacturing system and the same values from a simulation made in accordance with the present invention, wherein the simulation modeled cumulative and competing failure modes with beta values greater and less than one and false start probabilities. Preferably, the percent error (i.e., the ratio of the actual value minus the simulated value over the actual value X 100) is less than about 3%, and more preferably less about 2%. Most preferably, the error is less than about 1%. As will be appreciated, other values, such as the number of loss events, the downtime by loss event, can be outputted from a simulation made in accordance with the present invention. The amount of the error can be further decreased by, for example, increasing the number of downtime distributions which are simulated.

Example 1

|  | Actual system | Simulation of actual system | Percent Error |
|---|---|---|---|
| Availability | 0.8069 | 0.8067 | -0.1 |
| MTBF | 14.30 | 14.29 | -0.1 |
| MTTR | 3.39 | 3.42 | 1 |

Example 2

|  | Actual system | Simulation of actual system | Percent Error |
|---|---|---|---|
| Availability | 0.8616 | 0.8625 | 0.1 |
| MTBF | 17.40 | 17.86 | 2.6 |
| MTTR | 2.80 | 2.85 | 1.7 |

Example 3

| Failure Mode | Actual No. Events | Simulated No. of Events | Actual Downtime | Simulated Downtime | Percent Error In No. of Events | Percent Error in Downtime |
|---|---|---|---|---|---|---|
| 1 | 4192 | 4271 | 7355 | 7116 | -1.89 | 3.24 |
| 2 | 3012 | 3056 | 18018 | 18514 | -1.48 | -2.75 |
| 3 | 752 | 782 | 1178 | 1130 | -3.98 | 3.99 |
| 4 | 387 | 400 | 48 | 489 | -3.44 | -1.06 |
| 5 | 143 | 145 | 96 | 100 | -1.63 | -3.92 |
| 6 | 62 | 61 | 82 | 84 | 0.53 | -2.54 |
| 7 | 39 | 39 | 136 | 142 | -1.53 | -3.90 |
| 8 | 99 | 100 | 108 | 105 | -1.21 | 2.76 |

## EP 1 287 410 B1

**Claims**

1. A simulation process, comprising the following steps:

    collecting data from a first system, wherein said first system has a plurality of failure modes and said data relates to said failure modes;
    parameterizing said data for use with a computer program simulating a second system; and
    executing said computer program simulating said second system, wherein said executing step comprises the steps of determining whether said second system will encounter a first false start event based upon said data collected from said first system,
    said simulation process being **characterized in that** it also comprises the step of analyzing said first system to determine said failure modes and **in that** said executing step further comprises the step of calculating an uptime for each failure mode, and **in that** said failure modes include a plurality of cumulative cause failure modes and a plurality of competing cause failure modes.

2. The process of claim 1, **characterized in that** said executing step further comprises the step of determining which of said failure modes causes a first loss event for said second system.

3. The process of claim 2, **characterized in that** said executing step further comprises the step of calculating a downtime for said failure mode which causes said first loss event for said second system.

4. The process of claim 3, **characterized in that** said downtime is determined from one of a plurality of downtime distributions.

5. The process of any preceding claim, **characterized in that** said executing step further comprises the step of:

    if said failure mode which causes said first loss event of said second system is a cumulative cause failure mode, then calculating a second uptime for only said cumulative cause failure mode which causes said first loss event for said second system and calculating a second uptime for each of said competing cause failure modes.

6. The process of any preceding claim, wherein said executing step further comprises the steps of:

    if there is a first false start loss event, then calculating a downtime for said first false start loss event; and **characterized by** the step of
    determining whether said second system will encounter a second false start loss event following said downtime for said first false start loss event.

7. A computerized simulation process, comprising the following steps:

    receiving values for a plurality of parameters calculated from data collected from a first system, wherein said first system has a plurality of failure modes and said data relates to said failure modes; and

    **characterized in that** said failure modes include a plurality of cumulative cause failure modes and a plurality of competing cause failure modes, said simulation process being also **characterized by** the steps of determining whether a second system will encounter a first false start loss event based upon said data collected from said first system.

8. A program product comprising a signal bearing medium embodying a program of machine-readable instructions executable by a digital processing apparatus to perform the steps of claim 7.

9. An article of manufacture, comprising:

    at least one computer; and
    a program product comprising a signal bearing medium embodying a program of machine-readable instructions executable by a digital processing apparatus to perform the steps of claim 8.

**Patentansprüche**

1. Simulationsverfahren, das folgende Schritte umfasst:

   Sammeln von Daten aus einem ersten System, wobei das erste System mehrere Fehlermodi aufweist und sich die Daten auf die Fehlermodi beziehen;
   Parameterisieren der Daten zur Verwendung mit einem Computerprogramm, welches ein zweites System simuliert; und
   Ausführen des Computerprogramms, das das zweite System simuliert, wobei der Ausführungsschritt den Schritt umfasst, zu bestimmen, ob das zweite System ein erstes Fehlstartereignis basierend auf den Daten, die in dem ersten System gesammelt wurden, erfährt,

   wobei das Simulationsverfahren **dadurch gekennzeichnet ist, dass** es den Schritt umfasst, das erste System zu analysieren, um die Fehlermodi zu bestimmen, und **dadurch**, dass der Ausführungsschritt ferner den Schritt umfasst, eine Betriebszeit für jeden Fehlermodus zu berechnen, **dadurch**, dass die Fehlermodi mehrere Fehlermodi mit kumulativer Ursache und mehrere Fehlermodi mit konkurrierender Ursache einschließen.

2. Verfahren nach Anspruch 1, **dadurch gekennzeichnet, dass** der Ausführungsschritt ferner den Schritt umfasst, zu bestimmen, welcher der Fehlermodi ein erstes Verlustereignis für das zweite System hervorruft.

3. Verfahren nach Anspruch 2, **dadurch gekennzeichnet, dass** der Ausführungsschritt ferner den Schritt umfasst, eine Ausfallzeit für den Fehlermodus, der das erste Verlustereignis für das zweite System hervorruft, zu berechnen.

4. Verfahren nach Anspruch 3, **dadurch gekennzeichnet, dass** die Ausfallzeit aus einer von mehreren Ausfallzeitverteilungen bestimmt wird.

5. Verfahren nach einem der vorstehenden Ansprüche, **dadurch gekennzeichnet, dass** der Ausführungsschritt ferner den folgenden Schritt umfasst:

   wenn der Fehlermodus, der das erste Verlustereignis des zweiten Systems hervorruft, ein Fehlermodus mit kumulativer Ursache ist, dann Berechnen einer zweiten Betriebszeit für nur den Fehlermodus mit kumulativer Ursache, der das erste Verlustereignis für das zweite System hervorruft und Berechnen einer zweiten Betriebszeit für jeden der Fehlermodi mit konkurrierender Ursache.

6. Verfahren nach einem der vorstehenden Ansprüche, wobei der Ausführungsschritt ferner die folgenden Schritte umfasst:

   bei Auftreten eines ersten Fehlstart-Verlustereignisses dann Berechnen einer Ausfallzeit für das erste Fehlstart-Verlustereignis; und durch den folgenden Schritt **gekennzeichnet** ist
   Bestimmen, ob das zweite System ein zweites Fehlstart-Verlustereignis im Anschluss an die Ausfallzeit für das erste Fehlstart-Verlustereignis erfährt.

7. Computergesteuertes Simulationsverfahren, das folgende Schritte umfasst:

   Empfangen von Werten für mehrere Parameter, die aus Daten berechnet werden, die aus einem ersten System gesammelt werden, wobei das erste System mehrere Fehlermodi aufweist und sich die Daten auf die Fehlermodi beziehen; und

   **dadurch gekennzeichnet, dass** die Fehlermodi eine Wahrscheinlichkeit von Fehlermodi mit kumulativer Ursache und eine Wahrscheinlichkeit von Fehlermodi mit konkurrierender Ursache einschließen, wobei das Simulationsverfahren auch durch die Schritte **gekennzeichnet** ist, zu bestimmen, ob ein zweites System ein erstes Fehlstart-Verlustereignis basierend auf den Daten, die aus dem ersten System gesammelt wurden, erfährt.

8. Programmprodukt, umfassend ein signaltragendes Medium, welches ein Programm aus maschinenlesbaren Anweisungen umfasst, das durch ein digitales Verarbeitungsgerät ausführbar ist, um die Schritte nach Anspruch 7 auszuführen.

9. Fertigungsartikel, umfassend:

mindestens einen Computer; und

ein Programmprodukt, umfassend ein signaltragendes Medium, welches ein Programm aus maschinenlesbaren Anweisungen umfasst, das durch ein digitales Verarbeitungsgerät ausführbar ist, um die Schritte nach Anspruch 8 auszuführen.

## Revendications

1.  Procédé de simulation, comprenant les étapes suivantes :

    recueillir des données à partir d'un premier système, dans lequel ledit premier système a une pluralité de modes de défaillance et lesdites données concernent lesdits modes de défaillance ;
    paramétrer lesdites données pour une utilisation avec un logiciel simulant un deuxième système ; et
    exécuter ledit logiciel simulant ledit deuxième système, dans lequel ladite étape d'exécution comprend, en outre, l'étape consistant à déterminer si ledit deuxième système rencontrera un premier événement de faux départ sur base desdites données collectées à partir dudit premier système,
    ledit procédé de simulation étant **caractérisé en ce qu'**il comprend également l'étape consistant à analyser ledit premier système pour déterminer lesdits modes de défaillance et **en ce que** ladite étape d'exécution comprend, en outre, l'étape consistant à calculer un temps utilisable pour chaque mode de défaillance, et **en ce que** lesdits modes de défaillance incluent une pluralité de modes de défaillance à causes cumulées et une pluralité de modes de défaillance à causes concourantes.

2.  Procédé selon la revendication 1, **caractérisé en ce que** ladite étape d'exécution comprend, en outre, l'étape consistant à déterminer lequel desdits modes de défaillance provoque un premier événement de perte pour ledit deuxième système.

3.  Procédé selon la revendication 2, **caractérisé en ce que** ladite étape d'exécution comprend, en outre, l'étape consistant à calculer un temps d'arrêt pour ledit mode de défaillance qui provoque ledit premier événement de perte pour ledit deuxième système.

4.  Procédé selon la revendication 3, **caractérisé en ce que** ledit temps d'immobilisation est déterminé à partir d'une d'une pluralité de distributions de temps d'immobilisation.

5.  Procédé selon l'une quelconque des revendications précédentes, **caractérisé en ce que** ladite étape d'exécution comprend, en outre, l'étape consistant à :

    si ledit mode de défaillance qui provoque ledit premier événement de perte dudit deuxième système est un mode de défaillance à cause cumulée, calculer alors un deuxième temps utilisable pour uniquement ledit mode de défaillance à cause cumulée qui provoque ledit premier événement de perte pour ledit deuxième système et calculer un deuxième temps utilisable pour chacun desdits modes de défaillance à causes concourantes.

6.  Procédé selon l'une quelconque des revendications précédentes, dans lequel ladite étape d'exécution comprend, en outre, les étapes consistant à :

    s'il y a un premier événement de perte de faux départ, calculer alors un temps d'immobilisation pour ledit premier événement de perte de faux départ ; et **caractérisé par** l'étape consistant à :

    déterminer si ledit deuxième système rencontrera un deuxième événement de perte de faux départ à la suite dudit temps d'arrêt pour ledit premier événement de perte de faux départ.

7.  Procédé de simulation informatisé, comprenant les étapes suivantes :

    recevoir des valeurs pour une pluralité de paramètres calculés à partir de données recueillies à partir d'un premier système, dans lequel ledit premier système a une pluralité de modes de défaillance et lesdites données concernent lesdits modes de défaillance ; et

    **caractérisé en ce que** lesdits modes de défaillance incluent une pluralité de modes de défaillance à causes cumulées et une pluralité de modes de défaillance à causes concourantes, ledit procédé de simulation étant également **caractérisé par** les étapes consistant à déterminer si un deuxième système rencontrera un premier événement de perte de faux départ basé sur lesdites données recueillies à partir dudit premier système.

8. Produit de type programme comprenant un milieu portant signal renfermant un programme d'instructions lisibles par une machine exécutable par un appareil de traitement numérique pour exécuter les étapes selon la revendication 7.

9. Article manufacturé, comprenant :

au moins un ordinateur ; et
un produit de type programme comprenant un milieu portant signal renfermant un programme d'instructions lisibles par une machine exécutables par un appareil de traitement numérique pour exécuter les étapes selon la revendication 8.

```
┌─────────────────┐
│   Determine     │
│ heirarchial level ├──── 2/          ·     20
│   of system     │                    ╲
└────────┬────────┘                     ╲→
         │
         ▼
┌─────────────────┐
│ Identify failure │
│   modes and     ├──── 40
│    causes       │
└────────┬────────┘
         │
         ▼
┌─────────────────┐
│   Collect line  │
│   event data    ├──── 60
│                 │
└────────┬────────┘
         │
         ▼
┌─────────────────┐
│  Parameterically │
│  analyze line   ├──── 62
│   event data    │
└────────┬────────┘
         │
         ▼
┌─────────────────┐
│     Build       │
│  simulation     ├──── 148
│                 │
└────────┬────────┘                 Fig. 1
         │
         ▼
┌─────────────────┐
│   Implement     │
│  changes in     ├──── 150
│   the system    │
└─────────────────┘
```

Fig. 2

Distribution
Network — 52

54 — Mfg. Plant

Mfg. Plant — 54

Manufacturing
Line — 22

Manufacturing
Line — 22

Machine — 56

Machine — 56

58 — Machine
Sub-component

58 — Machine
Sub-component

Fig. 3

Fig. 4

1030 — | CPU |    | Main Memory |

1070 —

| Network Adapter |

1040

| Display Adapter |    | Auxiliary Storage Interface |

1000 —

1010 — | Hard Disk Drive |

1030 — | CPU |    | Main Memory |

1070 —

| Network Adapter |

1040

| Display Adapter |    | Auxiliary Storage Interface |

1000 —

1010 — | Hard Disk Drive |

Fig. 5

Fig. 6

EP 1 287 410 B1

Fig. 7

Fig. 8

D

Update
Rate/State and
send out down
signals — 134

116

Generate
random
number
between 0 & 1 — 136

Select
downtime
distribution — 138

E

Generate
random
number
between 0 & 1 — 140

Fig. 9

Send out updated
Rate/State, and
current sim time — 146

Determine
downtime — 142

Add downtime
to current sim
time — 144

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9824042 A
- EP 0878761 A

- US 5455777 A

### Non-patent literature cited in the description

- Using failure modes and effects simulation as a means of reliability analysis. **PALUMBO D.L.** Proceedings of the Digital Avionics Systems Conference. IEEE US, 1992, vol. 5-8, 102-107